# EUROPÄISCHE PATENTSCHRIFT

(11) **EP 1 230 513 B1**
(45) Veröffentlichungstag und Bekanntmachung des Hinweises auf die Patenterteilung: **15.08.2012**
(21) Anmeldenummer: 00987109.6
(22) Anmeldetag: 10.11.2000
(51) Int. Cl.: F21S 9/03

(54) **SOLARLAMPE FÜR DEN BETRIEB IM FREIEN**
SOLAR LAMP FOR OPEN-AIR USE
LAMPE SOLAIRE POUR USAGE EN PLEIN AIR

(30) Priorität: 12.11.1999 DE 29919948 U
(43) Veröffentlichungstag der Anmeldung: 14.08.2002
(73) Patentinhaber: Wismeth, Wolfgang, 90765 Fürth (DE); Lutz, Gerhard, 90473 Nürnberg (DE); Kohlmann, Werner, 90427 Nürnberg (DE)
(72) Erfinder: Wismeth, Wolfgang, 90765 Fürth (DE); Lutz, Gerhard, 90473 Nürnberg (DE); Kohlmann, Werner, 90427 Nürnberg (DE)
(74) Vertreter: Schuhmann, Albrecht
(86) Internationale Anmeldenummer: PCT/DE2000/003948
(87) Internationale Veröffentlichungsnummer: WO 2001/036866

(56) Entgegenhaltungen:
- DE-A- 4 242 333
- DE-C- 19 615 895
- DE-U- 8 521 579
- FR-A- 2 585 182
- US-A- 4 841 416

## Beschreibung

Die Erfindung betrifft eine Solarlampe für den Betrieb im Freien mit den Merkmalen des Oberbegriffs des Anspruchs 1.

Solarlampen für den Betrieb im Freien, insbesondere Gartenleuchten bestehend aus wenigstens einem Solarmodul, sowie einem Gehäuse mit einem Speichermittel für elektrische Energie (Akku), das elektrisch mit dem Solarmodul verbunden ist und wenigstens einem Leuchtkörper, wobei zwischen dem Akku und dem Leuchtkörper eine Schaltung vorhanden ist, die auf Signale eines an der Solarlampe angeordneten Lichtsensors reagiert und die elektrische Verbindung zwischen dem Akku und dem Leuchtkörper in Abhängigkeit von dem Grad von Helligkeit/Dunkelheit freigibt oder sperrt, sind bekannt. Eine Ausführung, die unter der Bezeichnung "Pagode" vertrieben wird, besteht aus einem in den Erdboden zu stecken Ständer, der oben ein zylindrisches Gehäuse aufweist, in das Leuchtkörper, Akku, Schaltung und Sensoren integriert sind und das von einem tellerförmigen, horizontal liegenden Solarmodul abgedeckt wird. Eine andere Ausführung, "Solite", weist ebenfalls ein tellerförmiges oberes Ende mit einem Solarmodul auf, das jedoch von einer transparenten Kuppel abgedeckt wird. Es ist auch bekannt, Solarlampen als Strassenlampen vorzusehen, wobei bei einer Ausführung ein plattenförmiges, längliches Solarmodul selbst als größter Bestandteil des Ständers dient. Andere Lösungen sehen Leitungen von Leuchten zu externen Solarmodulen vor, da die Leistung der auf den tellerförmigen Enden der Gartenleuchten angeordneten Module unzureichend ist, weil aus Designgründen und praktischen Erwägungen vorgezogen wird, kleine Module zu verwenden.

Dokument DE 8 521 579 U offenbart eine Solarlampe gemäβ dem Oberbegriff vom Anspruch 1.

Aufgabe der vorliegenden Erfindung ist es, eine Solarlampe zu schaffen, bei der die Energiegewinnung optimiert ist und die dennoch ein ästhetisch ansprechendes Design ermöglicht.

Diese Aufgabe wird mit den im kennzeichnenden Teils des Anspruchs 1 genannten Merkmalen gelöst. Fortbildungen und vorteilhafte Ausführungen der Erfindung sind in den weiteren Ansprüchen umfaßt.

Erfindungsgemäß ist Solarlampe für den Betrieb im Freien, insbesondere Gartenleuchte, Wegleuchte, Straßenlampe oder dergleichen, mit den Merkmalen des Anspruchs 1.

Mit diesem Grundgedanken wird die "reine Lehre" der Anordnung von Solarmodulen verlassen, wonach eine Ausrichtung nach Süden vorgeschlagen wird, um ein Maximum an Sonnenlichteinfall zu erhalten. Statt dessen werden zwei Module mit verschiedenen Orientierungen empfohlen, wobei es sich jedoch herausstellt, daß die Summe der gewonnenen Energie so weit erhöht ist, daß es möglich ist, mit relativ kleiner Bauweise der Lampe eine befriedigende Beleuchtung zu erreichen.

Die Befestigung ist vorzugsweise im Bereich der unteren Spitze des Würfels angeordnet und kann ein senkrechter Ständer oder ein horizontaler Arm sein.

Nach einer besonderen Ausführungsform der Erfindung ist weiter ein Bewegungsmelder vorhanden ist, die mit elektischen Steuermitteln verbunden sind, wobei der Leuchtkörper wenigstens zwei regelbare Helligkeitsstufen aufweist und die hellere Helligkeitsstufe in Reaktion auf ein Signal des Bewegungsmelders eingeschaltet wird, wobei ein Timer vorhanden ist, der diese Einschaltzeit begrenzt.

Nach einer vorteilhaften Ausführung der Erfindung besteht der Leuchtkörper aus einer Mehrzahl von Leuchtdioden (LED).

Im folgenden wird die Erfindung anhand von einer Zeichnung beispielhaft näher beschrieben.

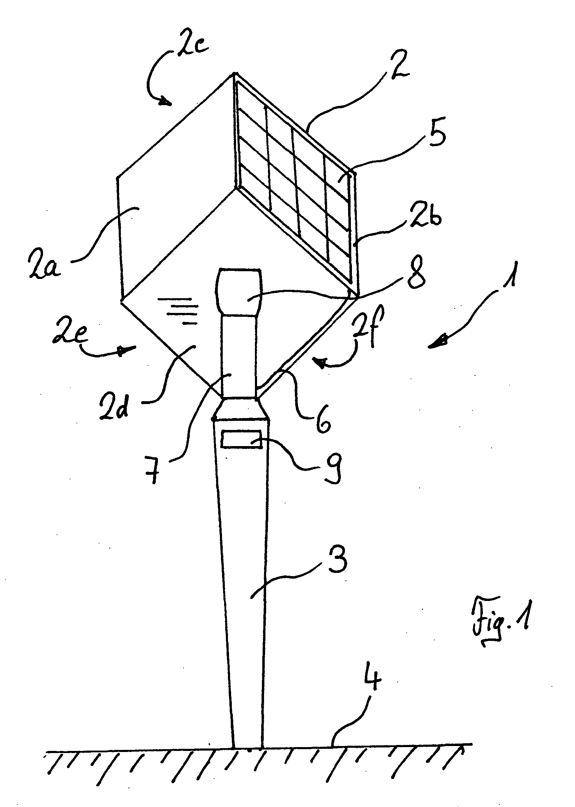

Fig. 1 zeigt eine Solarlampe 1, bestehend aus einem würfelfömigen Gehäuse 2 und einem Ständer 3. Das würfelförmige Gehäuse 2 steht mit einer unteren Spitze auf dem oberen Ende des Ständers 3 und ist dort an diesem befestigt. Der Ständer 3 ist in bekannter Weise in den Boden 4, z.B. Erdreich, gesteckt. Die Anordnung des würfelförmigen Gehäuses 2 ist dadurch so, daß drei Wandflächen 2a, 2b, 2c geneigt nach oben weisen und die drei anderen Wandflächen 2d, 2e, 2f nach unten. Die oberen Flächen 2a, 2b, 2c werden durch Solarmodule 5 gebildet, von denen hier nur das der Fläche 2b angedeutet ist. Solarmodule sind Glasplatten mit in Reihe geschalteten Solarzellen und einem Rahmen, wobei die Module hier mit ihren Rahmen so verbunden sind, daß sie die Würfelform ergeben. Die unteren Wandflächen 2d, 2e, 2f sind transparent und können beispielsweise durch gleiche Glasplatten gebildet werden, die keine Solarzellen tragen und die mit Rahemn versehen sind, mit denen sie untereinander und mit den Solarmodulen verbunden sind. Die Solarmodule sind mit Anschlüssen versehen, von denen aus Kabel 6 zu einem Modul 7 im Inneren des Gehäuses 2 geführt sind, das die oben geschilderten Schaltungen und den Akku aufweist. Auf dem Modul 7 ist ein Leuchtkörper 8 angeordnet. Ein Sensor 9 für Licht und Bewegung ist in dem Ständer 3 angeordnet, von dem die entsprechenden Leitungen zu dem Modul 7 laufen. Durch die Würfelform des Gehäuses 2 ist, wenn alle oberen Flächen 2a, 2b, 2c von Solarmodulen gebildet werden, oder Solarmodule tragen, gewährleistet, daß stets eine optimale Solarenergienutzung gewährleistet ist, ohne daß sich der Benutzer über die Orientierung der Solarmodule Gedanken machen muß.

## Patentansprüche

1. Solarlampe (1) für den Betrieb im Freien, insbesondere Gartenleuchte,
Wegleuchte oder Straßenlampe ,
bestehend aus wenigstens einem Solarmodul (5),
sowie einem Gehäuse (2) mit einem Speichermittel für elektrische Energie, das elektrisch mit dem Solarmodul (5) verbunden ist und wenigstens einem Leuchtkörper (8),
wobei zwischen dem Speichermodul und dem Leuchtkörper eine Schaltung vorhanden ist, die auf Signale eines an der Solarlampe (1) angeordneten Lichtsensors (9) reagiert und die elektrische Verbindung zwischen dem Speichermodul und dem Leuchtkörper (8) in Abhängigkeit von dem Grad von Helligkeit/Dunkelheit freigibt oder sperrt,
**dadurch gekennzeichnet,**
**dass** das Gehäuse (2) ein Würfel mit sechs Wandflächen ist, und dass der Würfel auf seiner Spitze stehend an einer Befestigung (3) angeordnet ist, und auf wenigstens zwei seiner oberen Flächen (2a, 2b, 2c) Solarmodule (5) angeordnet sind oder diese bilden.

2. Solarlampe nach Anspruch 1,
**dadurch gekennzeichnet,**
**daß** die Befestigung (3) im Bereich der unteren Spitze des Würfels angeordnet ist.

3. Solarlampe nach Anspruch 2,
**dadurch gekennzeichnet,**
**daß** die Befestigung für den Würfel ein senkrechter Ständer (3) oder ein horizontaler Arm ist.

4. Solarlampe nach einem der vorhergehenden Ansprüche,
**dadurch gekennzeichnet,**
**daß** weiter ein Bewegungsmelder vorhanden ist, die mit elektischen Steuermitteln verbunden sind,
**daß** der Leuchtkörper (8) wenigstens zwei regelbare Helligkeitsstufen aufweist,
und **daß** die hellere Helligkeitsstufe in Reaktion auf ein Signal des Bewegungsmelders eingeschaltet wird,
wobei ein Timer vorhanden ist, der diese Einschaltzeit begrenzt.

5. Solarlampe nach einem der vorhergehenden Ansprüche,
**dadurch gekennzeichnet,**
**daß** der Leuchtkörpe (8) aus einer Mehrzahl von Leuchtdioden besteht.

## Claims

1. A solar lamp (1) for use in the open air, in particular a garden lamp, pathway lamp or street lamp,
consisting of at least one solar module (5),
as well as a housing (2) with an accumulator means for electric energy which is electrically connected to the solar module (5) and at least one illuminating body (8),
wherein between the accumulator module and the illumination body, a circuit is provided which reacts to signals of one of the light sensors (9) arranged on the solar lamp (1) and forms or breaks the electrical connection between the accumulator module and the illumination body (8) depending on the degree of brightness/darkness,
**characterized in**
**that** the housing (2) is a cube having six wall surfaces and that the cube stands on its tip and is arranged on a mounting part (3), and on at least two of its upper surfaces (2a, 2b, 2c), solar modules (5) are arranged or form the upper surfaces.

2. The solar lamp according to claim 1,
**characterized in**
**that** the mounting part (3) is arranged in the region of the lower tip of the cube.

3. The solar lamp according to claim 2,
**characterized in**
**that** the mounting part for the cube is a vertical stand (3) or a horizontal arm.

4. The solar lamp according to any one of the preceding claims,
**characterized in**
**that** there is a further motion detector which is connected to electrical control means,
**that** the illumination body (8) has at least two controllable brightness levels and that the brighter brightness level is switched on in reaction to a signal of the motion detector,
wherein there is a timer which limits said switch-on time.

5. The solar lamp according to any one of the preceding claims,
**characterized in**
**that** the illumination body (8) consists of a plurality of light emitting diodes.

## Revendications

1. Lampe solaire (1) pour une utilisation en plein air, en particulier luminaire de jardin, luminaire de chemin ou réverbère, comprenant au moins un module solaire (5),
et un boîtier (2) avec un moyen accumulateur pour de l'énergie électrique, qui est relié électriquement au module solaire (5) et au moins un corps d'éclairage (8),
un circuit étant présent entre le module accumulateur et le corps d'éclairage, lequel réagit à des signaux d'un capteur de lumière (9) disposé sur la lampe solaire (1) et libérant ou bloquant la liaison électrique entre le module accumulateur et le corps d'éclairage (8) en fonction du degré de luminosité/obscurité,
**caractérisée en ce que**
le boîtier (2) est un cube avec six surfaces de paroi, et **en ce que** le cube est disposé debout sur sa pointe sur une fixation (3), et des modules solaires (5) sont disposés sur au moins deux de ses surfaces (2a, 2b, 2c) supérieures ou forment celles-ci.

2. Lampe solaire selon la revendication 1,
**caractérisée en ce que**
la fixation (3) est disposée dans la zone de la pointe inférieure du cube.

3. Lampe solaire selon la revendication 2,
**caractérisée en ce que**
la fixation pour le cube est un support (3) vertical ou un bras horizontal.

4. Lampe solaire selon l'une des revendications précédentes,
**caractérisée en ce**
**qu'**on a toujours un détecteur de mouvement, qui est relié à des moyens de commande électriques,
en ce que le corps d'éclairage (8) présente au moins deux niveaux de luminosité réglables,
et en ce que le niveau de luminosité plus clair est enclenché en réaction à un signal du détecteur de mouvement,
un chronomètre étant présent, lequel limite ce temps d'enclenchement.

5. Lampe solaire selon l'une des revendications précédentes,
**caractérisée en ce que**
le corps d'éclairage (8) comprend une pluralité de diodes électroluminescentes.
